# EUROPÄISCHE PATENTSCHRIFT

(11) **EP 2 603 330 B1**
(45) Veröffentlichungstag und Bekanntmachung des Hinweises auf die Patenterteilung: **06.08.2014**
(21) Anmeldenummer: 11721016.1
(22) Anmeldetag: 11.05.2011
(51) Int. Cl.: B08B 9/08, F22B 37/52, F28G 9/00

(54) **VERFAHREN ZUM ABSCHLUSS EINER CHEMISCHEN KRAFTWERKSREINIGUNG**
METHOD FOR CONCLUDING CHEMICAL POWER PLANT CLEANING
PROCÉDÉ POUR TERMINER UN NETTOYAGE CHIMIQUE D'UNE CENTRALE THERMIQUE

(30) Priorität: 13.08.2010 EP 10172770
(43) Veröffentlichungstag der Anmeldung: 19.06.2013
(73) Patentinhaber: Siemens Aktiengesellschaft, 80333 München (DE)
(72) Erfinder: KUHNKE, Klaus-Dieter, 91058 Erlangen (DE)
(86) Internationale Anmeldenummer: PCT/EP2011/057590
(87) Internationale Veröffentlichungsnummer: WO 2012/019793

(56) Entgegenhaltungen:
- EP-A1- 0 273 182
- EP-A1- 1 797 969
- EP-A1- 2 186 577
- DE-A1- 3 714 312
- DE-C1- 19 843 442

## Beschreibung

Die Erfindung betrifft ein Verfahren zum Reinigen mindestens eines Teils eines Wasser-Dampf-Kreislaufs einer Kraftwerksanlage, insbesondere ein Wasser sparendes Verfahren zum Abschluss einer chemischen Kraftwerksreinigung.

Der Wasser-Dampf-Kreislauf eines Kraftwerks wird üblicherweise vor Inbetriebnahme chemisch gereinigt. Dabei kommen entweder Säuren oder EDTA (Ethylendiamintetraessigsäure) zum Einsatz. Diese Chemikalien müssen anschließend aus dem System wieder entfernt werden. Bei einer typischen Säurebeizung ist dazu das mindestens vierfache Systemvolumen notwendig (bis zu 1000m3). Dabei ergeben sich zwei Probleme:
1. Das Gesamtvolumen muss als Abwasser behandelt bzw. entsorgt werden. Das führt mit zunehmend strengeren Auflagen zu hohen Kosten.
2. Die Nachspülung ist bezüglich Ablauf und Entleerung empfindlich gegen nicht korrekte Durchführung. Das Risiko erneuter Korrosion ist groß.

Daher werden bei der Säurebeizung in der Regel der Netzmittelschritt und der Beizschritt zusammengefasst, die Beizlösung wird nicht entleert und anschließend nass in nass durch Deionat ersetzt und danach passiviert. Der Wasserverbrauch ist jedoch hoch.

Die EP 0 273 182 offenbart ein Verfahren zum Reinigen eines Behälters, bei dem im Behälter befindliches Eisenoxid durch eine komplexbildende Säure aufgelöst wird, und das Eisenoxid als gelöster Eisenkomplex durch Entleeren des Behälters entfernt wird. Zur Vermeidung von Lufteintritt beim Entleeren wird der Behälter durch ein inertes Gas, insbesondere durch Stickstoff oder Wasserdampf, leergedrückt.

Aufgabe der Erfindung ist es, das genannte Verfahren weiterzuentwickeln, so dass das Abwasservolumen verringert ist.

Beim Verfahren der EP 1 797 969 A1 zum Reinigen von Komponenten einer Kraftwerksanlage wird im Kondensator kondensierter Dampf kontinuierlich in einem geschlossenen Strömungskreis durch ein oder mehrere zu reinigende Anlagenteile geführt, wobei eine Prüfung des Mediums auf seinen Reinheitsgrad in mindestens einem betrieblichen Anlagenteil durchgeführt wird. Hierdurch ist eine Reinigung ohne Unterbrechung bis zur Erreichung der erforderlichen Partikelfreiheit möglich.

Die DE 198 43 442 C1 offenbart eine Vorrichtung und ein Verfahren zur Reinigung von dampfführenden Komponenten in Anlagen mit Dampfkesseln. Dabei wird der durch die zu reinigende Komponente geblasene Dampf in einem Zentrifugalabscheider gereinigt und über den Kondensator der Anlage in die Kessleinrichtung zur Erzeugung des Ausblase-Dampfes rückgespeist.

Erfindungsgemäß wird die oben genannte Aufgabe gelöst durch ein Verfahren gemäß Anspruch 1. Vorteilhafte Weiterbildungen der Erfindung sind in den jeweiligen abhängigen Ansprüchen definiert. Indem bei einem Verfahren zum Reinigen mindestens eines Teils eines Wasser-Dampf-Kreislaufs einer Kraftwerksanlage, wobei eine Reinigungslösung in den zu reinigenden Teil eingebracht und anschließend abgelassen wird, während oder unmittelbar nach dem Ablassen der Reinigungslösung Dampf zum Spülen in den zu reinigenden Teil an mindestens einem Hochpunkt des zu reinigenden Teils eingespeist wird und Tiefpunktentleerungen im zu reinigenden Teil geöffnet werden oder bleiben und solange Dampf eingespeist wird, bis an den Tiefpunktentleerung Dampf austritt und diejenigen Tiefpunktentleerungen geschlossen werden, an denen Dampf austritt, und Dampf so lange eingespeist wird, bis an allen Tiefpunktentleerungen Dampf ausgetreten ist, worauf die Dampfeinspeisung geschlossen wird und alle Tiefpunktentleerungen wieder geöffnet werden, wird folgendes erreicht:
Wenn die Reinigungslösung aus dem System abgelassen und unmittelbar nach oder während der Entleerung Dampf eingespeist wird, wobei die Tiefpunktentleerungen geöffnet bleiben, kondensiert der einströmende Dampf auf den Metalloberflächen und das gebildete Kondensat wird über die Entleerung abgeführt. Durch die Verwendung von Dampf anstatt Wasser wird das Abwasservolumen verringert. Damit ist ein kleineres Beizbecken möglich und die Entsorgungskosten werden ebenfalls reduziert.

Durch die Kondensation erwärmt sich das Metall und der Kondensationspunkt verschiebt sich von der Einspeisestelle in Richtung Tiefpunktentleerung. Somit ist eine effektive Reinigung vom Hochpunkt zur Tiefpunktentleerung sichergestellt.

Weiterhin muss bei einer Dampfeinspeisung an einem Hochpunkt nicht abgewartet werden, bis die Reinigungslösung vollständig oder zumindest zum großen Teil abgelassen ist, sondern es kann unmittelbar mit Beginn des Ablassens der Reinigungslösung Dampf in den zu reinigenden Teil eingeleitet werden, so dass der Reinigungsvorgang beschleunigt werden kann.

Dadurch dass mindestens eine Tiefpunktentleerung im zu reinigenden Teil geöffnet bleibt, wobei solange Dampf eingespeist wird, bis an allen Tiefpunktentleerungen Dampf austritt wird sichergestellt, dass das gesamte System, vom Hochpunkt bis zu den Tiefpunktentleerungen, mit einer für die Reinigung ausreichenden Dampfmenge in Kontakt geraten ist.

Wenn an einer Tiefpunktentleerung Dampf austritt, kann davon ausgegangen werden, dass die Spülung des Systems, zumindest im Bereich dieser Tiefpunktentleerung, abgeschlossen ist. Bei größeren Systemen wird dabei solange Dampf eingespeist, bis an allen Tiefpunktentleerungen des zu reinigenden Teils Dampf ausgetreten ist. Dann wird die Dampfeinspeisung geschlossen und alle Entleerungen werden wieder geöffnet.

Dabei ist es zweckmäßig, wenn der Dampf in eine Trommel eines Dampfkessels eingespeist wird, die oberhalb des Verdampfers und zentral bezogen auf ein System umfassend einen Economizer, einen Verdampfer und einen Überhitzer angeordnet ist.

Es ist vorteilhaft, wenn ein Alkalisierungsmittel dem Dampf zugegeben wird. Somit kann die Effektivität der anschließenden Trockenkonservierung gesteigert werden. Eine Konservierung ist wichtig, wenn Dampferzeugungsanlagen außer Betrieb gehen, um die Anlage gegen Stillstandskorrosionen zu schützen.

Zweckmäßiger Weise wird Ammoniak als Alkalisierungsmittel dem Dampf zugegeben. Als eine der meistproduzierten Chemikalien und Grundstoff für die Produktion vieler weiterer Stickstoffverbindungen wird Ammoniak im großtechnischen Maßstab hergestellt und ist somit bei überschaubaren Kosten leicht verfügbar.

Es ist vorteilhaft, wenn nach dem Spülen mit Dampf Entlüftungen im gereinigten Teil der Kraftwerksanlage geöffnet werden, bis Restwasser aus dem System verdunstet ist. Werden alle Entlüftungen und Entleerungen unmittelbar nach der Spülung geöffnet, verdunstet Restwasser komplett aus dem heißen System und es ist trockenkonserviert.

Vorteilhafter Weise findet das Verfahren Verwendung in einem Dampfkraftwerk als Kraftwerksanlage.

Ebenso vorteilhaft ist es, wenn das Verfahren in einer Gas- und Dampfturbinenanlage als Kraftwerksanlage verwendet wird.

Es ist insbesondere vorteilhaft, wenn das Verfahren in einem Wasser-Dampf-Kreislauf eines Abhitzedampferzeugers verwendet wird.

Mit dem erfinderischen Verfahren wird das Abwasservolumen verringert. Damit ist ein kleineres Beizbecken möglich und die Entsorgungskosten werden reduziert. Weiterhin ist das System nach der Dampfspülung trockenkonserviert.

Die Erfindung wird beispielhaft anhand der Zeichnungen näher erläutert. Es zeigen schematisch und nicht maßstäblich:
- FIG 1: einen Ausschnitt aus einer Gas- und Dampfturbinenanlage in kaltem Zustand,
- FIG 2: einen Ausschnitt aus einer Gas- und Dampfturbinenanlage in teilweise erwärmtem Zustand und
- FIG 3: einen Ausschnitt aus einer Gas- und Dampfturbinenanlage angefüllt mit Dampf.

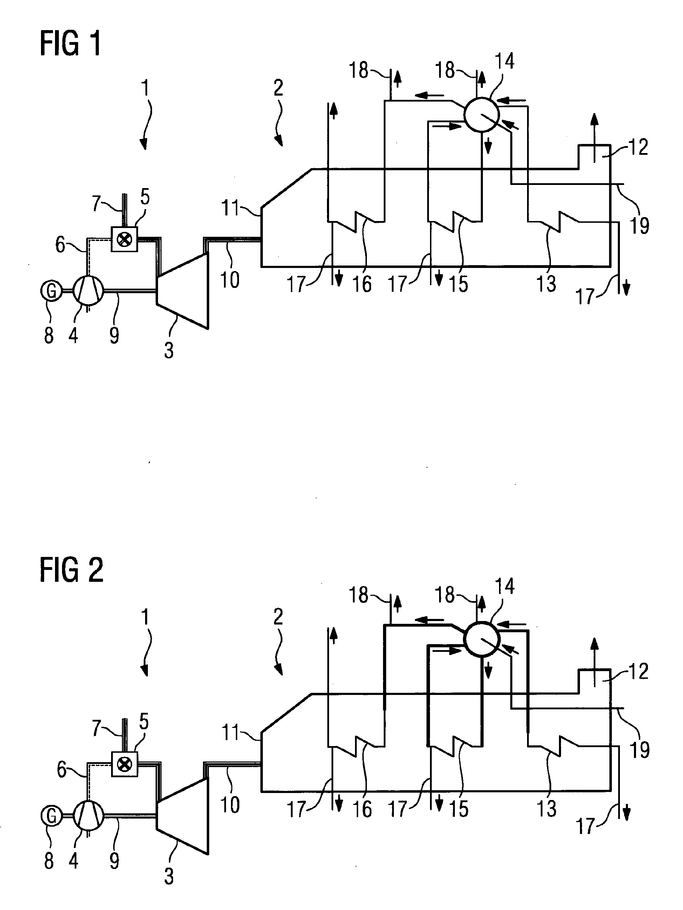

Die Figur 1 zeigt schematisch und beispielhaft einen Ausschnitt aus einer Gas- und Dampfturbinenanlage, umfassend eine Gasturbinenanlage 1 und einen Abhitzedampferzeuger 2. Die Gasturbinenanlage 1 umfasst dabei eine Gasturbine 3 mit angekoppeltem Luftverdichter 4 und eine der Gasturbine 3 vorgeschaltete Brennkammer 5, die an eine Frischluftleitung des Luftverdichters 4 angeschlossen ist. In die Brennkammer 5 mündet eine Brennstoffleitung 7. Die Gasturbine 3 und der Luftverdichter 4 sowie ein Generator 8 sitzen auf einer gemeinsamen Welle 9.

Von der Dampfturbinenanlage ist lediglich der Abhitzedampferzeuger 2 gezeigt. Zum Zuführen von in der Gasturbine 3 entspanntem Arbeitsmittel oder Rauchgas in den Abhitzedampferzeuger 2 ist eine Abgasleitung 10 an einen Eingang 11 des Abhitzedampferzeugers 2 angeschlossen. Das entspannte Arbeitsmittel aus der Gasturbine 3 verlässt den Abhitzedampferzeuger 2 über dessen Ausgang 12 in Richtung auf einen nicht näher dargestellten Kamin.

Im Abhitzedampferzeuger 2 sind exemplarisch Komponenten des Hochdruckteils eines Wasser-Dampf-Kreislaufs der Dampfturbinenanlage gezeigt. Ein Kondensatvorwärmer 13 oder Economizer ist ausgangsseitig mit einer Dampftrommel 14 für das umlaufende Wasser und zur Dampfabtrennung verbunden. Ein Verdampfer 15 ist zur Bildung eines geschlossenen Verdampferumlaufs ein- und ausgangsseitig an die Trommel 14 angeschlossen. Vorgewärmtes Speisewasser fließt über die Trommel 14 in den Verdampfer 15, wird dort verdampft und als Sattdampf zurück in die Trommel 14 geführt. Abgetrennter Dampf wird in den Überhitzer 16 geführt und dort überhitzt. Der Überhitzer 16 ist ausgangsseitig mit einem Dampfeinlass einer nicht gezeigten Dampfturbine verbunden.

Zur Restwasserentleerung weisen die Komponenten des Wasser-Dampf-Kreislaufs Tiefpunktentleerungen 17 auf. Entlüftungen 18 dienen der Belüftung des Wasser-Dampf-Kreislaufs. Eine Hilfsdampfleitung 19 mündet in die Trommel 14.

Die Figuren 1 bis 3 sind bzgl. der gezeigten Vorrichtung identisch. Mit Hilfe unterschiedlicher Linienstärken für dieselbe Komponente in verschiedenen Figuren soll das erfinderische Verfahren jedoch deutlicher dargestellt werden. Dabei steht eine dünne Linie im Abhitzedampferzeuger 2 für eine kalte Komponente an der Dampf kondensiert und eine dicke Linie für eine heiße Komponente (> 100°C).

Figur 1 zeigt somit das kalte System bei der chemischen Reinigung, bei der entweder Säuren oder EDTA zum Einsatz kommen. Sobald die Reinigungslösung über die Tiefpunktentleerungen 17 abgelassen wird, kann zur Nachspülung über die Hilfsdampfleitung 19 Dampf in die Trommel 14 geleitet werden. Der Dampf kondensiert auf den Metalloberflächen von Trommel 14, Verdampfer 15, Kondensatvorwärmer 13, Überhitzer 16 und den sie verbindenden Leitungen und das gebildete Kondensat wird über die Tiefpunktentleerungen 17 abgeführt.

Mit fortschreitender Dauer der Dampfzuführung erwärmt sich das Metall durch die Kondensation, und der Kondensationspunkt verschiebt sich ausgehend von der Dampftrommel 14 als Einspeisestelle in Richtung Tiefpunktentleerungen 17 (siehe Figur 2).

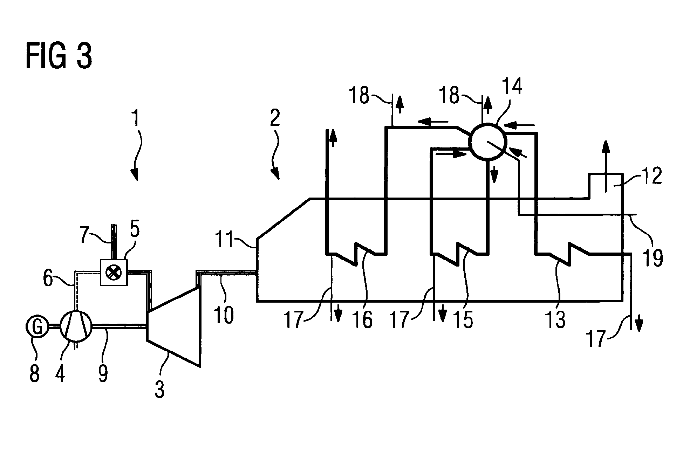

Wenn das System, wie in Figur 3 gezeigt, entsprechend aufgewärmt und die Spülung abgeschlossen ist, tritt an einer Tiefpunktentleerung 17 Dampf aus. Bei größeren Systemen mit mehreren Tiefpunktentleerungen 17 werden diejenigen Tiefpunktentleerungen 17, an denen Dampf austritt, geschlossen und die Spülung wird so lange fortgesetzt, bis an allen Tiefpunktentleerungen 17 Dampf ausgetreten ist. Dann wird die Dampfeinspeisung geschlossen und alle Tiefpunktentleerungen 17 wieder geöffnet. Zur besseren Verdunstung des Restwassers werden zusätzlich auch Entlüftungen 18 geöffnet.

## Patentansprüche

1. Verfahren zum Reinigen mindestens eines Teils eines Wasser-Dampf-Kreislaufs einer Kraftwerksanlage, wobei eine Reinigungslösung in den zu reinigenden Teil eingebracht und anschließend abgelassen wird, **dadurch gekennzeichnet, dass** während oder unmittelbar nach dem Ablassen der Reinigungslösung Dampf zum Spülen in den zu reinigenden Teil an mindestens einem Hochpunkt des zu reinigenden Teils eingespeist wird und Tiefpunktentleerungen (17) im zu reinigenden Teil geöffnet werden oder bleiben und solange Dampf eingespeist wird, bis an den Tiefpunktentleerungen (17) Dampf austritt und diejenigen Tiefpunktentleerungen (17) geschlossen werden, an denen Dampf austritt, und Dampf so lange eingespeist wird, bis an allen Tiefpunktentleerungen (17) Dampf ausgetreten ist, worauf die Dampfeinspeisung geschlossen wird und alle Tiefpunktentleerungen (17) wieder geöffnet werden.

2. Verfahren nach Anspruch 1, wobei der Dampf in eine Trommel (14) eines Dampfkessels eingespeist wird.

3. Verfahren nach einem der Ansprüche 1 oder 2, wobei ein Alkalisierungsmittel dem Dampf zugegeben wird.

4. Verfahren nach Anspruch 3, wobei Ammoniak dem Dampf zugegeben wird.

5. Verfahren nach einem der vorherigen Ansprüche, wobei nach dem Spülen mit Dampf Entlüftungen (18) im gereinigten Teil der Kraftwerksanlage geöffnet werden, bis Restwasser aus dem System verdunstet ist.

6. Verwendung des Verfahrens nach einem der vorhergehenden Ansprüche in einem Dampfkraftwerk als Kraftwerksanlage.

7. Verwendung des Verfahrens nach einem der Ansprüche 1 bis 5 in einer Gas- und Dampfturbinenanlage als Kraftwerksanlage.

8. Verwendung des Verfahrens nach einem der Ansprüche 1 bis 5 in einem Wasser-Dampf-Kreislauf eines Abhitzedampferzeugers (2).

## Claims

1. Method for cleaning at least a part of a water-steam circuit of a power plant, wherein a cleaning solution is introduced into the part requiring to be cleaned and subsequently is drained off, **characterised in that** while the cleaning solution is being drained off or immediately thereafter steam for flushing is injected into the part requiring to be cleaned at at least one high point of the part requiring to be cleaned and low-point drains (17) are opened or remain open in the part requiring to be cleaned and steam continues to be injected until steam emerges from the low-point drains (17) and those low-point drains (17) from which steam emerges are closed, and steam continues to be injected until steam has emerged from all low-point drains (17), whereupon the steam injection means is closed and all low-point drains (17) are reopened.

2. Method according to claim 1, wherein the steam is injected into a drum (14) of a steam boiler.

3. Method according to claim 1 or 2, wherein an alkalising agent is added to the steam.

4. Method according to claim 3, wherein ammonia is added to the steam.

5. Method according to one of the preceding claims, wherein deaerators (18) are opened in the cleaned part of the power plant following the steam flushing operation until residual water has evaporated from the system.

6. Use of the method according to one of the preceding claims in a steam power station as power plant installation.

7. Use of the method according to one of claims 1 to 5 in a combined gas and steam turbine system as power plant installation.

8. Use of the method according to one of claims 1 to 5 in a water-steam circuit of a heat recovery steam generator (2).

## Revendications

1. Procédé de nettoyage d'au moins une partie d'un circuit eau-vapeur d'une centrale électrique, dans lequel on introduit une solution de nettoyage dans la partie à nettoyer et on l'évacue ensuite, **caractérisé en ce que**, pendant ou juste après l'évacuation de la solution de nettoyage, on injecte de la vapeur de balayage dans la partie à nettoyer en au moins un point haut de la partie à nettoyer, et on ouvre ou on laisse ouvertes des évacuations (17) de points bas dans la partie à nettoyer et on injecte de la vapeur jusqu'à ce que la vapeur sorte des évacuations (17) de points bas et les évacuations (17) de points bas, où la vapeur sort, sont fermées et on injecte de la vapeur jusqu'à ce que de la vapeur sorte de toutes les évacuations (17) de points bas, puis on ferme l'injection de vapeur et on ouvre à nouveau toutes les évacuations (17) de points bas.

2. Procédé suivant la revendication 1, dans lequel on injecte la vapeur dans un tambour (14) d'une chaudière à vapeur.

3. Procédé suivant l'une des revendications 1 ou 2, dans lequel on ajoute un agent d'alcalinisation à la vapeur.

4. Procédé suivant la revendication 3, dans lequel on ajoute de l'ammoniac à la vapeur.

5. Procédé suivant l'une des revendications précédentes, dans lequel après le balayage par la vapeur, on ouvre des évacuations (18) dans la partie nettoyée de la centrale électrique jusqu'à ce que de l'eau restante soit évaporée du système.

6. Utilisation du procédé suivant l'une des revendications précédentes, dans une centrale à vapeur comme centrale électrique.

7. Utilisation du procédé suivant l'une des revendications 1 à 5, dans une installation de turbine à gaz et de turbine à vapeur comme centrale électrique.

8. Utilisation du procédé suivant l'une des revendications 1 à 5, dans un circuit eau-vapeur d'un générateur de vapeur à récupération de la chaleur perdue.
